# EUROPEAN PATENT APPLICATION

(11) **EP 4 510 549 A1**
(43) Date of publication of application: **19.02.2025**
(21) Application number: 23923687.0
(22) Date of filing: 25.09.2023
(51) Int. Cl.: H04M 1/72409

(54) **DRIVER CABIN BLUETOOTH PHONE CALL OUTPUT METHOD, DRIVER CABIN SYSTEM AND STORAGE MEDIUM**

(30) Priority: 24.02.2023 CN 202310163725
(71) Applicant: Ecarx (Hubei) Tech Co., Ltd., Wuhan, Hubei 430056 (CN)
(72) Inventor: DENG, Zhilong, Wuhan, Hubei 430056 (CN); CHEN, Bin, Wuhan, Hubei 430056 (CN); XIANG, Qingbao, Wuhan, Hubei 430056 (CN); WANG, Lin, Wuhan, Hubei 430056 (CN)
(74) Representative: Ipside
(86) International application number: PCT/CN2023/121127
(87) International publication number: WO 2024/174522

(57) **Abstract**

An output method of a Bluetooth phone call in a driving cabin, a driving cabin system, and a storage medium are provided. The output method includes: enabling establishment of a Bluetooth connection between the driving cabin and a mobile phone; when there is an incoming Bluetooth phone call on the mobile phone, acquiring a position of a passenger in the driving cabin participating in the Bluetooth phone call; determining a speaker closest to the passenger in the driving cabin; and enabling the speaker closest to the passenger to output an audio signal of the Bluetooth phone call, where the speaker closest to the passenger participating in the Bluetooth phone call is enabled to output the audio signal, so that the passenger participating in the phone call can hear more clearly, and a passenger not participating in the phone call can be protected from being interfered.

## Description

### TECHNICAL FIELD

The present invention relates to the field of driving cabin technologies and, in particular, to an output method of a Bluetooth phone call in a driving cabin, a driving cabin system, and a storage medium.

### BACKGROUND

At present, with a rapid iteration and update of in-vehicle intelligent networking, there are more and more DSPs (Digital Signal Processing, digital signal processor), amplifiers and speakers and other devices in a driving cabin, and an audio system is becoming more and more advanced. For example, the audio system generally includes at least 8 speakers, or even 21 speakers, which greatly improves users' audiovisual experience. At the same time, the control of the driving cabin has gradually upgraded from traditional buttons, touches and other manners to a safer and more efficient voice control manner, which causes an increase in the number of in-vehicle MICs (Microphone, microphones) in the driving cabin. For example, an in-vehicle cabin equipped with MICs in main driver and assistant driver seats as well as left and right seats in the back row has become dominant. If a Bluetooth phone call is incoming, an existing playing mode is to play it with all speakers in an automotive, or play it with a corresponding speaker on a side of the main driver. When other passengers in the driving cabin also want to participate in this phone call, or directly become main communicators of this phone call, the mode of playing by the corresponding speaker on the side of the main driver might easily cause other passengers to hear unclearly, and the mode of playing with all the speakers in the automotive might also result in interference to the main driver when listening to navigation or driving safely, which cannot meet needs of the users.

### SUMMARY

In view of the above problems, an output method of a Bluetooth phone call in a driving cabin, a driving cabin system, and a storage medium are proposed to overcome the above problems or at least partially solve the above problems.

An objective of the present invention is to enable a speaker closest to a passenger participating in a Bluetooth phone call to output an audio signal, so that the passenger participating in the call can hear more clearly and a passenger not participating in the call can be protected from being interfered.

According to one aspect of the present invention, the present invention provides an output method of a Bluetooth phone call in a driving cabin, including:
enabling establishment of a Bluetooth connection between the driving cabin and a mobile phone;
when there is an incoming Bluetooth phone call on the mobile phone, acquiring a position of a passenger in the driving cabin participating in the Bluetooth phone call;
determining a speaker closest to the passenger in the driving cabin;
enabling the speaker closest to the passenger to output an audio signal of the Bluetooth phone call.

Optionally, enabling the speaker closest to the passenger to output the audio signal of the Bluetooth phone call includes:
controlling, by a digital signal processor in the driving cabin, the speaker closest to the passenger to output the audio signal of the Bluetooth phone call.

Optionally, controlling, by the digital signal processor in the driving cabin, the speaker closest to the passenger to output the audio signal of the Bluetooth phone call includes:
sending an audio stream of the Bluetooth phone call to the digital signal processor in the driving cabin; where the digital signal processor is able to control sounding of each speaker in the driving cabin;
sending an identifier of the speaker closest to the passenger to the digital signal processor, so that the digital signal processor controls the speaker corresponding to the identifier to output the audio signal of the Bluetooth phone call.

Optionally, a type of the audio stream is a pulse code modulation type.

Optionally, acquiring the position of the passenger in the driving cabin participating in the Bluetooth phone call includes:
determining, according to a sound picked up by a microphone in the driving cabin, the position of the passenger participating in the Bluetooth phone call.

Optionally, after enabling the speaker closest to the passenger to output the audio signal of the Bluetooth phone call, the method further includes:
if a duration for which the passenger stops participating in the Bluetooth phone call is greater than a preset threshold, turning off the speaker closest to the passenger.

According to another aspect of the present invention, the present invention also provides a driving cabin system, including a memory and a processor, where a control program is stored in the memory, and when the control program is executed by the processor, the output method of the Bluetooth phone call in the driving cabin according to any one of the above-mentioned items is implemented.

According to yet another aspect of the present invention, the present invention further provides a machine-readable storage medium, having a machine-executable program stored thereon, where when the machine-executable program is executed by a processor, the output method of the Bluetooth phone call in the driving cabin according to any one of the above-mentioned items is implemented.

According to yet another aspect of the present invention, the present invention further provides an in-vehicle multimedia terminal, including a memory and a processor, where a control program is stored in the memory, and when the control program is executed by the processor, the output method of the Bluetooth phone call in the driving cabin according to any one of the above-mentioned items is implemented.

In an output method of a Bluetooth phone call in a driving cabin according to the present invention, establishment of a Bluetooth connection is enabled between the driving cabin and a mobile phone; and when there is an incoming Bluetooth phone call on the mobile phone, a position of a passenger in the driving cabin participating in the Bluetooth phone call is acquired; a speaker closest to the passenger in the driving cabin is determined; and the speaker closest to the passenger is enabled to output an audio signal of the Bluetooth phone call. This allows the passenger participating in the Bluetooth phone call to more clearly hear the audio signal of the Bluetooth phone call output by the speaker, and can also reduce or avoid interference of the audio signal to a passenger not participating in the Bluetooth phone call, thereby improving the passenger's user experience.

Furthermore, a preset threshold may be set according to actual needs, for example, any value ranging from 1 to 10 minutes, which may be 2 minutes, 5 minutes, 7 minutes, etc. If a duration for which the passenger stops participating in the Bluetooth phone call is greater than a preset threshold, meaning that the passenger no longer needs the call, the speaker closest to the passenger is turned off, thereby reducing waste of resources.

The specific embodiments of the present invention will be described in detail below with reference to the accompanying drawings, those skilled in the art will be more aware of the above and other objectives, advantages and features of the present invention.

### BRIEF DESCRIPTION OF DRAWINGS

Various other advantages and benefits will become apparent to those of ordinary skill in the art by reading the detailed description of the preferred embodiments below. The accompanying drawings are only for the purpose of illustrating the preferred embodiments and are not to be considered as a limitation on the present invention. And throughout the accompanying drawings, the same reference symbols are used to represent the same components. In the accompanying drawings:
FIG. 1 is a flowchart of an output method of a Bluetooth phone call in a driving cabin according to an embodiment of the present invention;
FIG. 2 is a flowchart of an output method of a Bluetooth phone call in a driving cabin according to another embodiment of the present invention; and
FIG. 3 is a schematic structural diagram of a driving cabin system according to an embodiment of the present invention.

### DESCRIPTION OF EMBODIMENTS

The exemplary embodiments of the present disclosure will be described in more detail below with reference to the accompanying drawings. Although the exemplary embodiments of the present disclosure are shown in the accompanying drawings, it should be understood that the present disclosure can be implemented in various forms and should not be limited by the embodiments set forth herein. On the contrary, these embodiments are provided in order to understand the present disclosure more thoroughly, and to fully convey the scope of the present disclosure to those skilled in the art.

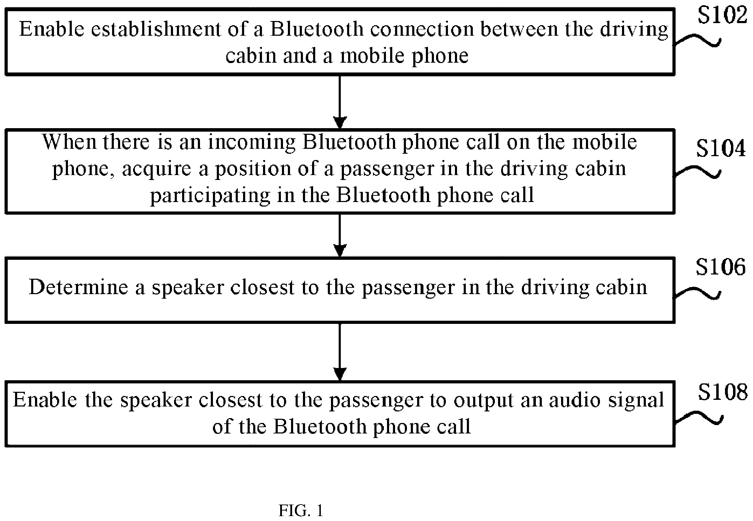

FIG. 1 is a flowchart of an output method of a Bluetooth phone call in a driving cabin according to an embodiment of the present invention. The output method of the Bluetooth phone call in the driving cabin may include the following steps S102 to S108.

Step S102, enable establishment of a Bluetooth connection between the driving cabin and a mobile phone.

Step S104, when there is an incoming Bluetooth phone call on the mobile phone, acquire a position of a passenger in the driving cabin participating in the Bluetooth phone call.

Step S106, determine a speaker closest to the passenger in the driving cabin.

Step S108, enable the speaker closest to the passenger to output an audio signal of the Bluetooth phone call.

In the embodiment, establishment of a Bluetooth connection is enabled between the driving cabin and a mobile phone; when there is an incoming Bluetooth phone call on the mobile phone, a position of a passenger in the driving cabin participating in the Bluetooth phone call is acquired, a speaker closest to the passenger in the driving cabin is determined, the speaker closest to the passenger is enabled to output an audio signal of the Bluetooth phone call. This allows the passenger participating in the Bluetooth phone call to more clearly hear the audio signal of the Bluetooth phone call output by the speaker, and can also reduce or avoid interference of the audio signal to a passenger not participating in the Bluetooth phone call, thereby improving the passenger's user experience. In general, when there is an incoming Bluetooth phone call on the mobile phone, if the position of the passenger participating in the Bluetooth phone call in the driving cabin is not acquired, a priority will be given to enable the speaker positionally closest to a main driver to output the audio signal of the Bluetooth phone call. It can be understood that this solution may be applied regardless of one or more persons performing a Bluetooth phone call. For example, when more persons are performing a Bluetooth phone call, speakers closest to individual persons may be found to output the audio signal of the Bluetooth phone call respectively. Of course, it is also possible to enable all speakers to output the audio signal of the Bluetooth phone call. Both options are arbitrarily selectable.

In an embodiment of the present invention, enabling the speaker closest to the passenger to output the audio signal of the Bluetooth phone call may include:
controlling, by a digital signal processor in the driving cabin, the speaker closest to the passenger to output the audio signal of the Bluetooth phone call.

In the embodiment, a driving cabin system generally includes the digital signal processor, and the speaker closest to the passenger is controlled by the digital signal processor in the driving cabin, to output the audio signal of the Bluetooth phone call, without adding additional hardware costs, which is very convenient.

In an embodiment of the present invention, the digital signal processor in the driving cabin controlling the speaker closest to the passenger to output the audio signal of the Bluetooth phone call may include:
sending an audio stream of the Bluetooth phone call to the digital signal processor in the driving cabin; where the digital signal processor is able to control sounding of each speaker in the driving cabin;
sending an identifier of the speaker closest to the passenger to the digital signal processor, so that the digital signal processor controls the speaker corresponding to the identifier to output the audio signal of the Bluetooth phone call.

In the embodiment, each speaker has a unique identifier, so that a corresponding speaker may be identified according to a respective identifier. The audio stream of the Bluetooth phone call is sent to the digital signal processor in the driving cabin, and the identifier of the speaker closest to the passenger is sent to the digital signal processor, so that the digital signal processor controls the speaker corresponding to the identifier to output the audio signal of the Bluetooth phone call, which is very simple and flexible.

In an embodiment of the present invention, a type of the audio stream is a pulse code modulation (Pulse Code Modulation, abbreviated as PCM) type.

In the embodiment, the type of the audio stream is the PCM type, according to which a better sound quality effect may be obtained, with more cleared hearing by the passenger in the call.

In an embodiment of the present invention, acquiring the position of the passenger in the driving cabin participating in the Bluetooth phone call may include:
determining, according to a sound picked up by a microphone in the driving cabin, the position of the passenger participating in the Bluetooth phone call.

In the embodiment, the closer the passenger participating in the Bluetooth phone call to the microphone, the greater an intensity of the sound picked up by the microphone. The microphone from which the sound comes may be determined according to the intensity of the sound, and then a seat where the microphone is located may be determined, thereby the position of the passenger participating in the Bluetooth phone call is obtained. Therefore, each seat in the driving cabin may be provided with a microphone, and the position of the passenger participating in the Bluetooth phone call may be determined according to the sound picked up by the microphone in the driving cabin, so that the position of the passenger participating in the Bluetooth phone call may be determined accurately and easily.

In an embodiment of the present invention, after enabling the speaker closest to the passenger to output the audio signal of the Bluetooth phone call, the method may further include:
if a duration for which the passenger stops participating in the Bluetooth phone call is greater than a preset threshold, turning off the speaker closest to the passenger.

In the embodiment, the preset threshold may be set according to actual needs, for example, any value ranging from 1 to 10 minutes, which may be 2 minutes, 5 minutes, 7 minutes, etc. If the duration for which the passenger stops participating in the Bluetooth phone call is greater than the preset threshold, meaning that the passenger no longer needs the call, the speaker closest to the passenger is turned off, thereby reducing waste of resources.

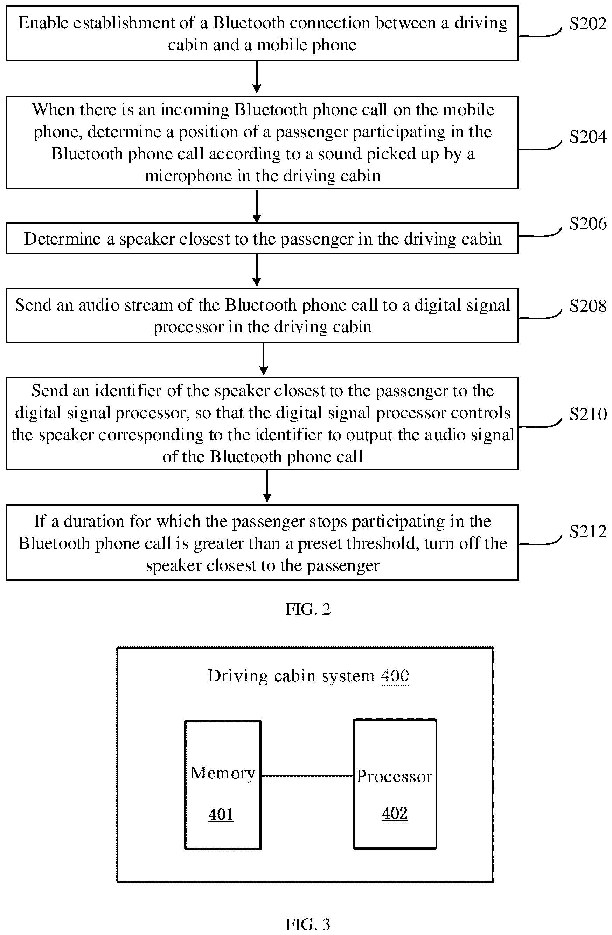

FIG. 2 is a flowchart of an output method of a Bluetooth phone call in a driving cabin according to another embodiment of the present invention. A microphone and a speaker may be provided at each seat in the driving cabin, and a digital signal processor in the driving cabin may control each speaker, the output method of the Bluetooth phone call in the driving cabin may include the following steps.

Step S202, enable establishment of a Bluetooth connection between the driving cabin and a mobile phone.

Step S204, when there is an incoming Bluetooth phone call on the mobile phone, determine a position of a passenger participating in the Bluetooth phone call according to a sound picked up by a microphone in the driving cabin.

Step S206, determine a speaker closest to the passenger in the driving cabin.

Step S208, send an audio stream of the Bluetooth phone call to a digital signal processor in the driving cabin.

Step S210, send an identifier of the speaker closest to the passenger to the digital signal processor, so that the digital signal processor controls the speaker corresponding to the identifier to output the audio signal of the Bluetooth phone call.

Step S212, if a duration for which the passenger stops participating in the Bluetooth phone call is greater than a preset threshold, turn off the speaker closest to the passenger.

FIG. 3 is a schematic structural diagram of a driving cabin system 400 according to an embodiment of the present invention. Based on the same concept, the present invention further provides the driving cabin system 400. The driving cabin system 400 includes a memory 401 and a processor 402, where a control program is stored in the memory 401, and when the control program is executed by the processor 402, the output method of the Bluetooth phone call in the driving cabin according to any one of the above-mentioned embodiments is implemented.

Based on the same concept, the present invention further provides a machine-readable storage medium, having a machine-executable program stored thereon, where when the machine-executable program is executed by a processor, the output method of the Bluetooth phone call in the driving cabin according to any one of the above-mentioned embodiments is implemented.

Based on the same concept, the present invention further provides an in-vehicle multimedia terminal. The in-vehicle multimedia terminal may include a memory and a processor, where a control program is stored in the memory, and when the control program is executed by the processor, the output method of the Bluetooth phone call in the driving cabin according to any one of the above-mentioned embodiments is implemented.

The above embodiments may be combined arbitrarily. According to any one of the above preferred embodiments or a combination of multiple preferred embodiments, the embodiments of the present invention can achieve the following beneficial effects.

In an output method of a Bluetooth phone call in a driving cabin according to the present invention, establishment of a Bluetooth connection is enabled between the driving cabin and a mobile phone; and when there is an incoming Bluetooth phone call on the mobile phone, a position of a passenger in the driving cabin participating in the Bluetooth phone call is acquired; a speaker closest to the passenger in the driving cabin is determined; the speaker closest to the passenger is enabled to output an audio signal of the Bluetooth phone call. This allows the passenger participating in the Bluetooth phone call to more clearly hear the audio signal of the Bluetooth phone call output by the speaker, and can also reduce or avoid interference of the audio signal to a passenger not participating in the Bluetooth phone call, thereby improving the passenger's user experience.

At this point, those skilled in the art should recognize that, although multiple exemplary embodiments of the present invention have been shown and described in detail herein, many other variations or modifications that conform to the principles of the present invention may still be directly determined or derived according to the content disclosed in the present invention, without departing from the spirit and scope of the present invention. Therefore, the scope of the present invention should be understood and recognized as covering all such other variations or modifications.

## Claims

1. An output method of a Bluetooth phone call in a driving cabin, comprising:
enabling establishment of a Bluetooth connection between the driving cabin and a mobile phone;
when there is an incoming Bluetooth phone call on the mobile phone, acquiring a position of a passenger in the driving cabin participating in the Bluetooth phone call;
determining a speaker closest to the passenger in the driving cabin;
enabling the speaker closest to the passenger to output an audio signal of the Bluetooth phone call.

2. The output method of the Bluetooth phone call in the driving cabin according to claim 1,
wherein enabling the speaker closest to the passenger to output the audio signal of the Bluetooth phone call comprises:
controlling, by a digital signal processor in the driving cabin, the speaker closest to the passenger to output the audio signal of the Bluetooth phone call.

3. The output method of the Bluetooth phone call in the driving cabin according to claim 2,
wherein controlling, by the digital signal processor in the driving cabin, the speaker closest to the passenger to output the audio signal of the Bluetooth phone call comprises:
sending an audio stream of the Bluetooth phone call to the digital signal processor in the driving cabin; wherein the digital signal processor is able to control sounding of each speaker in the driving cabin;
sending an identifier of the speaker closest to the passenger to the digital signal processor, so that the digital signal processor controls the speaker corresponding to the identifier to output the audio signal of the Bluetooth phone call.

4. The output method of the Bluetooth phone call in the driving cabin according to claim 3,
wherein a type of the audio stream is a pulse code modulation type.

5. The output method of the Bluetooth phone call in the driving cabin according to any one of claims 1 to 4,
wherein acquiring the position of the passenger in the driving cabin participating in the Bluetooth phone call comprises:
determining, according to a sound picked up by a microphone in the driving cabin, the position of the passenger participating in the Bluetooth phone call.

6. The output method of the Bluetooth phone call in the driving cabin according to any one of claims 1 to 4,
wherein after enabling the speaker closest to the passenger to output the audio signal of the Bluetooth phone call, the method further comprises:
if a duration for which the passenger stops participating in the Bluetooth phone call is greater than a preset threshold, turning off the speaker closest to the passenger.

7. A driving cabin system, comprising: a memory and a processor, wherein a control program is stored in the memory, and when the control program is executed by the processor, the output method of the Bluetooth phone call in the driving cabin according to any one of claims 1 to 6 is implemented.

8. A machine-readable storage medium having a machine-executable program stored thereon, wherein when the machine-executable program is executed by a processor, the output method of the Bluetooth phone call in the driving cabin according to any one of claims 1 to 6 is implemented.

9. An in-vehicle multimedia terminal, comprising: a memory and a processor, wherein a control program is stored in the memory, and when the control program is executed by the processor, the output method of the Bluetooth phone call in the driving cabin according to any one of claims 1 to 6 is implemented.
